# EUROPÄISCHE PATENTANMELDUNG

(11) **EP 1 879 367 A1**
(43) Veröffentlichungstag der Anmeldung: **16.01.2008**
(21) Anmeldenummer: 07013512.4
(22) Anmeldetag: 10.07.2007
(51) Int. Cl.: H04M 1/725

(54) **Funkkommunikationsanordnung**

(30) Priorität: 13.07.2006 DE 202006010816 U
(71) Anmelder: Dometic GmbH, 57074 Siegen (DE)
(72) Erfinder: Müller, Volker, 57271 Hilchenbach (DE); Peter, Jörg, 57072 Siegen (DE)
(74) Vertreter: GROSSE BOCKHORNI SCHUMACHER

(57) **Zusammenfassung**

Die Erfindung beschreibt eine Funkkommunikationsanordnung insbesondere zum Betrieb in Freizeiteinrichtungen, welche insbesondere nach dem ZigBee Standard arbeitet. Im Bereich von Motorcaravans, Caravans, Mobilheime oder Booten können mit der Anordnung sekundäre Einrichtungen wie Klimaanlagen, Belüftungsfenster und Beleuchtungen gesteuert werden. Ebenso können über eine erfindungsgemäße Anlage per Funk Sensorsignale über den Zustand des Batterieladezustandes, eines Frischwasserbehälters, oder Meldesignale von Rauchsensoren und Bewegungssensoren empfangen und verarbeitet werden. Bevorzugt können die Signale ausgegeben werden, oder über ein Mobilfunknetz an ein Mobiltelefon weitergeleitet werden, um den Anwender unmittelbar mit Informationen über sein Freizeitfahrzeug zu versorgen.

## Beschreibung

Die Erfindung bezieht sich auf eine Funkkommunikationsanordnung und insbesondere auf eine Funkkommunikationsanordnung, in der bidirektionale Kommunikation nach einem auf einem Kommunikationsprotokoll basierenden Kommunikationsstandard zwischen zwei oder mehreren Kommunikationspartnern durchgeführt werden kann.

Insbesondere ist einer der Kommunikationspartner dabei als Kommandoeinheit ausgelegt, wobei der andere Kommunikationspartner im Wesentlichen als Empfangseinheit für Befehle von der Kommunikationseinheit ausgelegt ist und als Einheit die Steuerbefehle entgegennimmt und die Ausführung dieser Steuerbefehle von der Kommandoeinheit veranlasst.

Mit einer Weiterentwicklung der Technik und kostengünstig verfügbarer Halbleitertechnologie steigen die Anforderungen an den Komfort bei der Bedienung und an die Automatisierung im Heim und im Freizeitbereich zunehmend.

Über die allseits zur Verfügung stehende Mobilfunktechnologie, oder andere Medien wie das Internet hat sich der Anwender daran gewöhnt, überall Zugriff auf Einrichtungen und Informationen zu haben, auch wenn sie nicht direkt vor Ort zur Verfügung stehen. Aus diesem Grund steigt auch der Bedarf im Freizeitbereich, aktuell über den Zustand von Freizeitfahrzeugen und der dortigen Bedingungen informiert zu sein und gegebenenfalls per Fernsteuerung und Fernkommando Befehle zu erteilen, um bestimmte Zustände im Freizeitfahrzeug einzustellen oder zu überprüfen.

In heutigen Freizeitfahrzeugen sind bereits vielfältige technische Einrichtungen installiert, wie beispielsweise Dachfenster, Klimaanlagen, Kühlschränke, Leuchten, Wasserpumpen, Markisen, Heizungen usw., deren Steuerung einen beträchtlichen Verdrahtungsaufwand erfordert.

Weil die Komfortansprüche auch im Freizeitbereich ständig steigen, sollte eine Erweiterung der technischen Einrichtungen im Bereich eines Freizeitfahrzeugs ohne großen Aufwand möglich sein. Bei heutigen Einrichtungen ist es erforderlich, für die neu hinzuzubringenden Geräte in Bereichen eines Freizeitfahrzeugs neue Steuerungsleitungen sowie elektrische oder andersartige Versorgungsleitungen unterzubringen. Dies gestaltet sich besonders schwierig, da Freizeitfahrzeuge häufig in Leichtbauweise ausgeführt sind und Leitungen nicht einfach zu verlegen sind, ohne die Stabilität des Aufbaus des Freizeitfahrzeugs zu gefährden. Auch bedeuten zusätzliche Leitungen mehr Gewicht für das Freizeitfahrzeug, welches sich negativ auf Zulassung und Führerscheinklassifizierung auswirkt.

Aus dem veröffentlichten deutschen Gebrauchsmuster DE 202005015165 U1 ist eine fernsteuerbare Schließvorrichtung für ein Fahrzeug bekannt. Diese Schließvorrichtung soll kompakt sein und weist eine berührungsempfindliche Anzeige auf, mit der verschiedenen Funktionen des Fahrzeugs steuerbar und abfragbar sind. Beispielsweise kann der Öffnungszustand von Schlössern, der Füllzustand des Tanks, der Ladezustand der Batterie und der Ort eines Fahrzeugs abgefragt werden. Auch ist es möglich, Einrichtungen wie eine Standheizung oder eine Klimaanlage bzw. eine Alarmeinrichtung des Kfz mit Hilfe dieser Fernsteuerung zu nutzen und entsprechende Informationen abzufragen bzw. anzusteuern.

Dieser Stand der Technik hat jedoch den Nachteil, dass einzelne Geräte nicht separat angesteuert werden können, dass komplizierte Verdrahtungen erforderlich sind, um Befehle im Kfz zu verteilen und Informationen über die Funkeinrichtung abfragbar zu machen. Ebenso nachteilig ist, dass eine Fernbedienung der zugeordneten Einrichtungen nur im Funkbereich des Schlüssels möglich ist. Weiterhin ist es mit diesem Gerät nicht möglich, Betriebsszenarien einzustellen, die als Folge bestimmter Umgebungszustände bzw. bestimmter Parameter im Kfz einzuhalten sind, bzw. per Fernübertragung solche Parameter abzufragen und gegebenenfalls neu einzustellen.

Ausgehend von diesem Stand der Technik stellt sich die vorliegende Erfindung die Aufgabe, eine modulare einfach erweiterbare Kommunikationsanordnung anzugeben, bei der insbesondere die Möglichkeit vorhanden ist, komplexe Betriebsszenarien der unterschiedlichen Komponenten der Kommunikationsanordnung einzustellen, zu planen oder fallweise in Abhängigkeit vorhandener Parameter zu steuern.

Die Erfindung soll insbesondere in Freizeitfahrzeugen, wie Caravans, Motorcaravans, Mobilheime und Booten einsetzbar sein. Insbesondere sollen wenigstens die zweiten Kommunikationsgeräte der Kommunikationsanordnung besonders energiesparend arbeiten.

Diese Aufgabe wird gemäß der Erfindung durch eine Funkkommunikationsanordnung nach Anspruch 1 gelöst. Weiterbildungen der Erfindung ergeben sich aus den abhängigen Ansprüchen 2 bis 13.

Vorteilhaft besteht eine erfindungsgemäße Kommunikationsanordnung mindestens aus zwei Geräten, wobei das erste Gerät senden und empfangen kann und das zweite Gerät wenigstens senden kann. Auf diese Weise ist eine einfache Anordnung realisierbar, mit der wenigstens über Funk Sensordaten von einer zweiten Kommunikationseinrichtung an eine erste Einrichtung übertragen werden können, um von dort abgefragt, bzw. dort weiterverarbeitet zu werden.

Vorteilhaft weist bei einer Weiterbildung der erfindungsgemäßen Kommunikationsanordnung das zweite Gerät ein ihm zugeordnetes Detektionsmittel auf, mit dem es möglich ist, einen Parameter am Ort des zweiten Gerätes zu detektieren, wobei das zweite Gerät Mittel aufweist, um diesen Parameter an das erste Gerät zu senden.

Besonders vorteilhaft weist bei einer Weiterbildung der erfindungsgemäßen Kommunikationsanordnung das zweite Gerät Empfangsmittel auf, mit dem es Befehle vom ersten Gerät empfangen kann und Ausführungsmittel, mit dem Steuerbefehle vom ersten Gerät zur Ausführung gebracht werden können, sodass beispielsweise Aktoren betätigt werden können, Füllstände abgefragt werden können, usw.

Besonders vorteilhaft sieht es eine Weiterbildung der erfindungsgemäßen Kommunikationsanordnung vor, dass das zweite Gerät mit einem Stellgerät verbunden ist, so kann das zweite Gerät universell gestaltet sein und je nach Bedarf ein unterschiedliches Stellgerät angeschlossen werden.

Besonders vorteilhaft ist bei einer Weiterbildung der erfindungsgemäßen Kommunikationsanordnung das Ausführungsmittel Einrichtungen wie einen Kühlschrank, Klimageräten, Beleuchtung, Markise, Fahrtreppe, Wasserpumpe, Heizung oder Dachfenster zugeordnet, da dies Einrichtungen sind, die häufig in Freizeitfahrzeugen anzutreffen sind, sodass am Markt ein großer Bedarf nach kostengünstigen und einfach zu realisierenden Lösungen besteht, welche durch die Erfindung hiermit zur Verfügung gestellt werden können.

Besonders vorteilhaft weist eine Weiterbildung der erfindungsgemäßen Funkkommunikationsanordnung Mittel zur Durchführung einer kodierten Kommunikation nach einem standardisierten Funkkommunikationsprotokoll auf, wie beispielsweise dem ZigBee Standard, weil auf diese Weise im Hinblick auf den internationalen Betrieb überregionale technische Voraussetzungen erfüllt werden, die keiner erneuten Zulassung bedürfen. Weil Freizeitfahrzeuge häufig über Staatsgrenzen hinweg bewegt werden können, ist so vorteilhaft nicht mit Schwierigkeiten beim Betrieb der Einrichtungen im Ausland zu rechnen.

Besonders vorteilhaft weist bei einer Weiterbildung der erfindungsgemäßen Kommunikationsanordnung das erste Gerät eine Anzeige zum Anzeigen mindestens einer ein zweites Gerät betreffenden Information auf, da so ein Anwender der Kommunikationsanordnung zentral über angeschlossene zweite Kommunikationsgeräte einfach Informationen erhalten kann, die er benötigt. Solche Informationen können beispielsweise die Uhrzeit, die Innen-, die Außentemperatur, den Zustand von Frisch- und Abwasserstand, den Bordfahrzeugbatteriestatus, Gasflaschenstatus, Netzanschluss, usw. betreffen.

Besonders vorteilhaft weist das erste Gerät bei einer Weiterbildung der erfindungsgemäßen Funkkommunikationsanordnung ein Eingabeelement auf, mit welchem eine Eingabe bewirkt werden kann, die ein erstes Funksignal erzeugt, das an ein zweites Kommunikationsgerät gesendet wird.

Besonders vorteilhaft sieht es eine andere Weiterbildung der erfindungsgemäßen Kommunikationsanordnung vor, dass das erste Gerät Mittel aufweist, mit denen es über ein Funknetz kommunizieren kann, wie beispielsweise das Mobilfunknetz GSM. Auf diese Weise ist kostengünstig und einfach eine Fernsteuerung der über das erste Gerät erreichbaren Einrichtungen im Freizeitfahrzeug über das Mobilfunknetz möglich.

Weiterhin können ebenso Parameter, die vor Ort im Freizeitfahrzeug vorliegen und abgefragt werden, an das Funknetz gesendet werden und über das Mobilfunknetz beispielsweise auf einem Mobiltelefon angezeigt werden. So kann beispielsweise besonders vorteilhaft ein Anwender über sein Mobiltelefon Informationen erhalten, wenn die Batterie im Freizeitfahrzeug leer ist, ein Alarm ausgelöst wurde, ein Rauchmelder Alarm gibt usw. oder wenn bestimmte Vorratsbehälter für Gas und Frischwasser leer sind, bzw. wenn die Batterieladung vorgegebenen Wert unterschreitet.

Auch besteht die Möglichkeit, über das Funkkommunikationsnetz mit dem Mobiltelefon Befehle an das Freizeitfahrzeug zu senden, sodass beispielsweise die Dachluke geöffnet werden kann, das Licht eingeschaltet werden kann und eine Heizung bzw. eine Klimaanlage betätigt werden können. Ebenso kann beispielsweise der Kühlschrank ferngesteuert eingeschaltet werden, sodass er sich auf angenehmer Kühltemperatur befindet, wenn der Besitzer des Freizeitfahrzeugs vor Ort eintrifft.

Besonders vorteilhaft sieht es eine Weiterbildung der erfindungsgemäßen Funkkommunikationsanordnung vor, dass Befehle über ein Mobilfunkgerät, das heißt ein Mobiltelefon, mittels SMS, das heißt einer Kurznachricht, an das erste Kommunikationsgerät gesendet werden können, weil diese eine standardisierte Kommunikationstechnologie ist, die breit etabliert ist und die zuverlässig und kostengünstig zur Verfügung steht.

Besonders vorteilhaft ist bei einer Weiterbildung der erfindungsgemäßen Funkkommunikationsanordnung im ersten Gerät ein Aktionsmittel angeordnet, mit dem verschiedene Aktionen bei den zweiten Geräten steuerbar sind, vorzugsweise über eine Zeitsteuerung, aber auch abhängig von Sensorinformationen, die von den zweiten Kommunikationsmitteln empfangen werden und gegebenenfalls verarbeitet werden. Zum Beispiel kann zu bestimmten Tageszeiten das Licht eingeschaltet werden und der Fernseher oder das Radio, sodass der Anschein erweckt wird, dass ein Freizeitfahrzeug bewohnt ist.

Im folgenden werden Ausführungsbeispiele der Erfindung anhand von Figuren weiter erläutert.
- Fig. 1: zeigt ein Beispiel eines herkömmlichen Schaltschranks eines Freizeitfahrzeugs.
- Fig. 2: zeigt ein Beispiel eines ersten Gerätes einer Funkkommunikationsanordnung nach der Erfindung.
- Fig. 3: zeigt ein Beispiel einer Funkkommunikationsanordnung nach der Erfindung.
- Fig. 4: zeigt ein weiteres Beispiel einer Funkkommunikationsanordnung nach der Erfindung.
- Fig. 5: zeigt den prinzipiellen Aufbau eines ersten Gerätes.
- Fig. 6: zeigt den prinzipiellen Aufbau eines zweiten Gerätes.

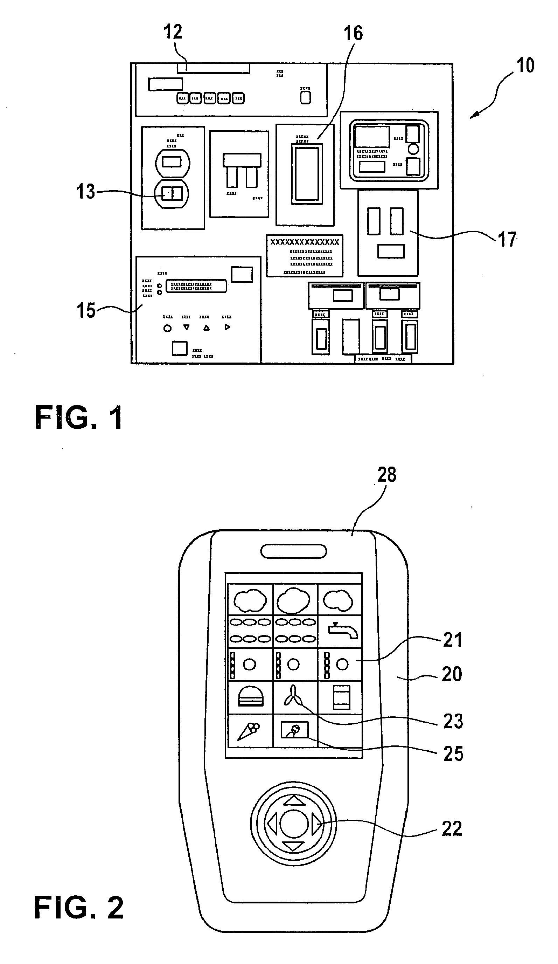

Wie Fig. 1 zeigt, besitzt ein herkömmlicher Schaltschrank eines Freizeitfahrzeugs vielfältige Schalteinrichtungen, wie beispielsweise Sicherungen 12, einen Hauptlichtschalter 13, eine Heizungssteuerung 15, Bordnetzschalter 17 und einen Hauptschalter 16. Der Schaltschrank selbst ist in Fig. 1 mit 10 bezeichnet.

Im Zusammenhang mit der Kommunikationsanordnung nach der Erfindung wird diese hauptsächlich in Verbindung mit Freizeitfahrzeugen, wie sie beispielsweise als Boote, Caravans oder Campingmobilen am Markt verfügbar sind, besprochen. Es gibt jedoch auch Einsatzgebiete im Hausbereich, in denen ebenfalls die Erfindung zur Anwendung kommen kann. Beispielsweise sind solche Anwendungsgebiete im Bereich von Gartenpavillons, Bootshäusern und ähnlichem denkbar.

Wie man in Fig. 1 weiter erkennen kann, nehmen die Schalteinrichtungen vielfältiger Art eines Freizeitfahrzeugs sehr viel Platz ein, sind sehr unübersichtlich und nicht ansprechend anzusehen. Wie man auch leicht erkennen kann, erscheint die Anordnung planlos, und es ist möglich, dass sie von Einrichtung zu Einrichtung variiert, sodass kein hoher Qualitätseindruck entsteht.

Fig. 2 zeigt ein erstes Gerät einer erfindungsgemäßen Kommunikationsanordnung. Deutlich ist am ersten Gerät, das hier beispielsweise als bidirektionale Fernsteuerung ausgeführt ist, eine Anzeige mit Elementen 21, 23 und 25 zu erkennen. Eine Antenne 28 ist im Gerät integriert und eine Steuereinrichtung 22 ist am Gerät angebracht. Das erste Gerät selbst ist mit 20 bezeichnet.

Bevorzugt funktioniert die erfindungsgemäße Kommunikationsanordnung nach dem ZigBee Standard. ZigBee ist eine Allianz von mehreren am Markt operierenden Funkhardwareherstellern zur Vernetzung von Heimgeräten. ZigBee ermöglicht es, Haushaltsgeräte, Sensoren, usw. auf Kurzstrecken (10 - 75 m) zu verbinden. Es stellt einen Protokollstack dar, der nach dem OSI-Modell auf den im Standard IEEE 802.15.4 spezifizierten OSI-Subschichten PHY und MAC aufsetzt.

Es ist dort ebenfalls der Einsatz batterieloser, wartungsfreier Funkschalter und Funksensoren in schwer zugänglichen Bereichen vorgesehen, wo der regelmäßige Austausch von Batterien nur mit großem Aufwand möglich wäre (Auszug aus Wikipedia vom 12.05.2006). Es ist deutlich erkennbar, dass die Anwendung eines solchen Standards Vorteile im Freizeitbereich mit sich bringt, wo energiesparende Einrichtungen zwingend erforderlich sind.

Weiterhin bietet der Einsatz eines internationalen Standards den Vorteil, dass auf dem Standard aufsetzende Geräte international kompatibel sind und dass bezüglich des Betriebs der Geräte keine Probleme im Ausland auftreten.

Bei 23 ist beispielsweise eine Lüftungseinrichtung zu erkennen. Mittels des Gerätes 20 können beispielsweise ein Kühlschrank, eine Klimaanlage, Beleuchtungseinrichtungen, die Markise, die motorische Treppe des Wohnmobils, die Wasserpumpe, die Heizung und ein Dachlukenfenster angesteuert werden.

Weiterhin kann das Gerät, das beispielsweise mit 12 V arbeitet und mit einer Funkfrequenz von 2,4 GHz, Sensorinformationen empfangen, von einem Rauchmelder, von einem Messinstrument der Fahrzeugbatterie, einem Messinstrument an der Gasflasche, am Netz, usw., einem Thermometer für die Innen- und Außentemperatur, Bewegungssensoren, Rauchsensoren, Regensensoren, Leistungssensoren und Schalterstellungen von anderen Geräten, wie beispielsweise einer Beleuchtungseinrichtung, einem Ventilator, usw.

Denkbar ist es auch, dass eine Satellitenempfangseinrichtung und ein Fernsehgerät über das Kommunikationsgerät 1 steuerbar sind.

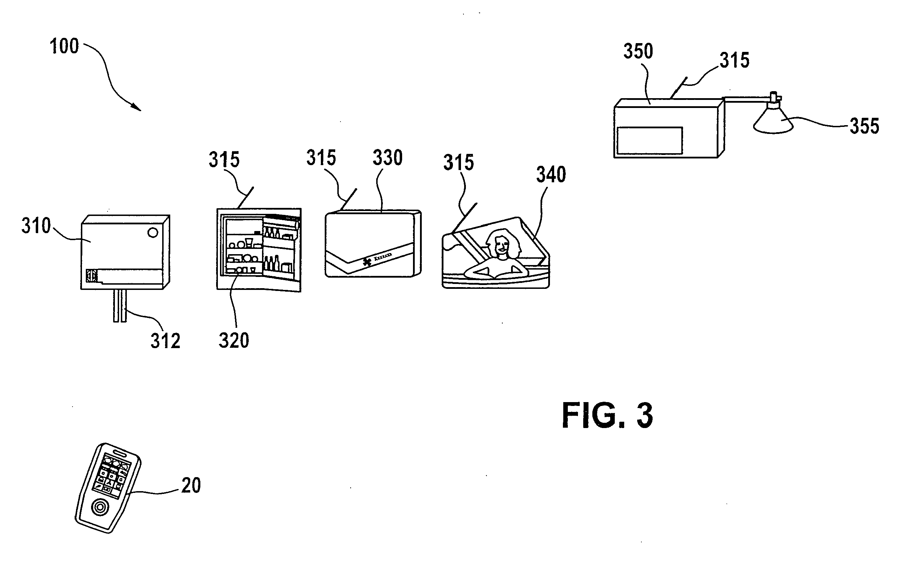

Fig. 3 zeigt ein Beispiel einer erfindungsgemäßen Kommunikationsanordnung 100. Das erste Gerät 20 ist mit zweiten Geräten 320, 330, 340 und 350 auf dem Funkweg verbindbar, dazu weisen die jeweiligen zweiten Kommunikationsgeräte Antennen 315 auf. Hier werden beispielsweise ein Kühlschrank 320, eine Klimaanlage 330, eine Dachluke 340 und ein Beleuchtungsschalterempfänger 350 mit angeschlossener Beleuchtungseinrichtung 355 gezeigt. Weiterhin ist eine Ladestation 310 dargestellt, die vom Bordnetz über Leitungen 312 mit 12 V Gleichspannung versorgt wird, in welche das erste Kommunikationsgerät eingesteckt werden kann, um den dort befindlichen Akkumulator aufzuladen.

Abgesehen davon, dass das Gerät 310 als Ladestation dient, kann es im eingesteckten Zustand auch Signale mit dem Kommunikationsgerät 20 austauschen und diesem, falls dort weitere Kommunikationsgeräte angeschlossen sind, Signale von diesen zuführen bzw. Steuerbefehle auf dem Drahtweg vom ersten Gerät an die zweiten Geräte weiterleiten.

Die zweiten Geräte unterscheiden sich prinzipiell in ihrem Aufbau voneinander dadurch, dass es Einrichtungen gibt, die lediglich Informationen empfangen und Sensorinformationen über Betriebs- oder Umgebungszustände an das erste Kommunikationsgerät weiterleiten, sodass in ihnen fallweise keine Empfangseinrichtung erforderlich ist, sondern lediglich eine Sendeeinrichtung, und dass es zweite Kommunikationsgeräte gibt, die bidirektional kommunizieren, indem sie Befehle vom ersten Kommunikationsgerät entgegennehmen und Zustandssignale über Betriebszustände in ihrem Bereich an das erste Kommunikationsgerät senden, oder Befehle ausführen oder weiterleiten.

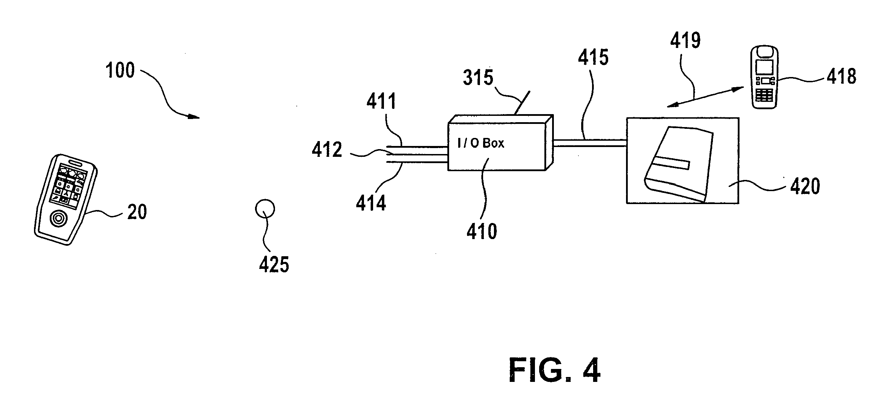

Wie Fig. 4 zeigt, besteht ein weiteres Ausführungsbeispiel einer erfindungsgemäßen Kommunikationsanordnung aus einer Kommunikationsbox 410 mit Antenne 315 und einem Mobilfunkkommunikationsmodul 420, das über eine Kommunikationsstrecke 419 mit einem Mobiltelefon 418 kommunizieren kann. Die Eingabe-/Ausgabebox 410 ist über eine Kommunikationsstrecke mit dem Kommunikationsmodul 420 verbunden, kann aber auch direkt in das Modul integriert sein, ohne dass die Funktionsweise der erfindungsgemäßen Kommunikationsanordnung beeinträchtigen würde.

Dargestellt sind weiterhin Verbindungsleitungen 411, 412 und 414, mit denen die Eingabe-/Ausgabebox beispielsweise mit einem Sensor 425 verbunden sein kann, der Informationen über Zustände des Freizeitfahrzeugs liefert. Beispielsweise können solche Sensoren als Rauchsensoren, Regensensoren, Bewegungsmelder, Füllstandsmesser, Leistungsmesser, GPS-Empfänger, usw. ausgeführt sein.

Über das Mobiltelefon 418 können beispielsweise per SMS oder per DTMF-Signalgabe Signale und Befehle an das Funkkommunikationsmodul 420 gesendet werden. Diese werden dann an die Eingabe-/Ausgabebox übertragen, fragen gegebenenfalls die Sensoren ab, die an den Leitungen 411, 412 und 414 angeschlossen sind, oder über die Funkstrecke über die Antenne 315 angeschlossene zweite Geräte. So kann beispielsweise der Öffnungszustand einer Dachluke oder die eingestellte Temperatur einer Klimaanlage kommuniziert werden. Gegebenenfalls kann ein Kühlschrank geschaltet werden, eine Beleuchtung gesteuert, eine Markise ein- und ausgefahren, die Klimaanlage eingeschaltet, das Fernsehgerät oder ein Radiogerät, usw. Die Eingabe-/Ausgabebox kann über Funk beispielsweise auch eine Wasserpumpe des Freizeitfahrzeugs ansteuern.

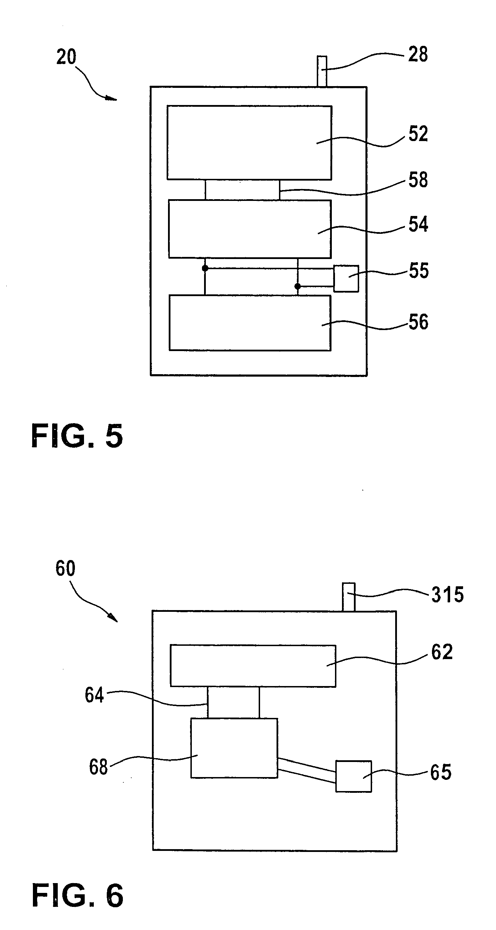

Fig. 5 zeigt als Beispiel den schematischen Aufbau eines ersten Gerätes einer erfindungsgemäßen Kommunikationsanordnung. Das Gerät ist mit 20 bezeichnet. Prinzipiell ist zu sagen, dass das erste Gerät sowohl die Eingabe-/Ausgabebox 410, wie auch das in der Hand zu haltende Fernsteuerungsgerät 20 sein kann. In einem Fall weist es Eingabeeinrichtungen und eine Anzeige auf, im anderen Fall weist es ein Kommunikationsmittel auf, mit dem es über das Mobilfunknetz mit einem Mobiltelefon kommunizieren kann. Prinzipiell ist eine Antenne 28 dargestellt, über die ein Sende- und Empfangssignal ausgetauscht werden kann.

Mit 52 ist eine Sende- und Empfangseinrichtung bezeichnet, mit 58 ein interner Verdrahtungsbus, mit 54 eine zentrale Verarbeitungseinheit, mit 55 eine Eingabe-/Ausgabeeinrichtung, die beispielsweise eine serielle Schnittstelle sein kann, die in einem Fall beispielsweise an ein Mobilkommunikationsmodul angeschlossen sein kann, oder in einem anderen Fall an eine Anzeige und eine Eingabevorrichtung. Mit 56 ist eine Speichervorrichtung bezeichnet. Prinzipiell können mit der zentralen Verarbeitungseinheit und dem Speicher alle in der Erfindung beschriebenen Mittel realisiert werden, indem im Speicher 56 gespeicherte Programme über die zentrale Verarbeitungseinrichtung zur Ausführung gebracht werden.

Insbesondere können im Speicher bestimmte Betriebsszenarien abgelegt sein, mit der eine Anwesenheit eines Anwenders im Bereich des Freizeitfahrzeugs simuliert werden kann. Beispielsweise können Jalousien geöffnet und geschlossen werden, eine Dachluke kann geöffnet werden, die Beleuchtung kann ein- und ausgeschaltet werden, was ebenso für ein Radio- oder ein Fernsehgerät gilt. Ebenso können die Klimaanlage und weitere Einrichtungen zeitgesteuert betätigt werden.

Es besteht ebenfalls die Möglichkeit, bestimmte Szenarien einzustellen, indem beispielsweise bei einer Meldung vom Regensensor eine Wasserpumpe eingeschaltet wird und die Dachluke geschlossen wird oder bei einer Meldung vom Rauchsensor und vom Bewegungssensor ein Alarm abgegeben wird.

Fig. 6 zeigt als Beispiel den prinzipiellen Aufbau eines zweiten Gerätes der erfindungsgemäßen Kommunikationsanordnung. Es ist eine Antenne 315 zum Senden wenigstens eines Signals dargestellt, eine Sendeeinrichtung 62, die gegebenenfalls auch als Sende-/Empfangseinrichtung ausgeführt sein kann, ein Controller 68 und eine Ein-/Ausgabevorrichtung 65. Das zweite Gerät selbst ist mit 60 bezeichnet. Im einfachsten Fall ist das zweite Gerät 60 über die Ein-/Ausgabeschnittstelle mit einem Sensor verbunden und meldet die Signale über die Sendeeinrichtung 62 und über die Antenne 315 an das erste Gerät weiter. Dort werden dann die Signale ausgewertet und weiterverarbeitet.

Im anderen Fall besitzt das zweite Gerät eine Sende-/Empfangseinrichtung und Stellvorrichtungen und kann beispielsweise Informationen über Betriebszustände an das erste Gerät senden und gleichzeitig Befehle vom ersten Gerät empfangen und zur Ausführung bringen.

Voranstehend wurden lediglich Ausführungsbeispiele der Erfindung beschrieben, die allerdings nur Einzelheiten der Erfindung verdeutlichen sollen und nicht als einschränkend anzusehen sind.

## Patentansprüche

1. Funkkommunikationsanordnung (100), mit
a) einem ersten Gerät (20, 410) mit ersten Mitteln (28, 315) zum Senden eines ersten Befehlssignals an ein zweites Gerät (320, 330, 340, 350) und mit zweiten Mitteln zum Empfangen eines zweiten Funksignals vom zweiten Gerät (320, 330, 340, 350);
b) einem zweiten Gerät (320, 330, 340, 350), das mindestens dritte Mittel (315, 62) zum Senden des zweiten Funksignals aufweist.

2. Funkkommunikationsanordnung (100) nach Anspruch 1, bei der dem zweiten Gerät (320, 330, 340, 350) ein Detektionsmittel (68) zur Detektion eines Parameters am Ort des zweiten Gerätes zugeordnet ist und es Weitergabemittel (55) zur Weitergabe des Parameters an die dritten Mittel (62) aufweist.

3. Funkkommunikationsanordnung (100) nach einem der vorangehenden Ansprüche, bei der das zweite Gerät (320, 330, 340, 350) vierte Mittel (62) zum Empfangen des ersten Funkbefehlssignals aufweist und Ausführungsmittel (68), die so ausgestaltet sind, dass sie eine Ausführung eines im ersten Funkbefehlssignal enthaltenen Steuerbefehls veranlassen.

4. Funkkommunikationsanordnung (100) nach Anspruch 1, bei der das zweite Gerät (320, 330, 340, 350) mit einem Stellgerät (65) verbunden ist.

5. Funkkommunikationsanordnung (100) nach Anspruch 3 oder Anspruch 4, bei der das Ausführungsmittel mindestens einer der folgenden Einrichtungen zugeordnet ist: Kühlschrank, Klimaanlage, Beleuchtung, Markise, Fahrtreppe, Wasserpumpe, Heizung, Dachfenster.

6. Funkkommunikationsanordnung (100) nach einem der vorangehenden Ansprüche, bei der fünfte Mittel (52, 62) zur Durchführung der Funkkommunikation nach einem codierten Standardprotokoll, insbesondere nach dem ZigBee Standard vorhanden sind.

7. Funkkommunikationsanordnung (100) nach einem der vorangehenden Ansprüche, bei der das erste Gerät (20, 410) eine Anzeige (21) zum Anzeigen mindestens einer ein zweites Gerät (330) betreffenden Information (23) aufweist und eine Eingabevorrichtung (22) zur Auswahl des zweiten Gerätes (330).

8. Funkkommunikationsanordnung (100) nach Anspruch 7, bei der die Eingabevorrichtung (22) so ausgestaltet ist, dass über eine Eingabe ein erstes Funkbefehlssignal erzeugbar ist.

9. Funkkommunikationsanordnung (100) nach einem der Ansprüche 1 bis 6, bei der das erste Gerät (410) sechste Mittel (56) zur mittelbaren oder unmittelbaren Kommunikation mit einem dritten Gerät (420) eines Mobilfunknetzes, insbesondere GSM, aufweist.

10. Funkkommunikationsanordnung (100) nach Anspruch 9, bei der das sechste Mittel so ausgestaltet ist, dass über es ein erstes Funkbefehlssignal erzeugbar ist.

11. Funkkommunikationsanordnung (100) nach Anspruch 10, bei der das sechste Mittel so ausgestaltet ist, dass es das zweite Funksignal aufbereitet und/oder weiterleitet.

12. Funkkommunikationsanordnung (100) nach Anspruch 9 oder Anspruch 10, welche an einen Kurznachrichtenstandard, insbesondere SMS angepasst ist.

13. Funkkommunikationsanordnung (100) nach einem der vorangehenden Ansprüche, bei dem im ersten Gerät (20, 410) siebte Mittel angeordnet sind, die so ausgestaltet sind, dass sie infolge des Empfangs des zweiten Funksignals und/oder zeitgesteuert mindestens ein erstes Funksignal senden.
